# EUROPÄISCHE PATENTANMELDUNG

(11) **EP 1 059 201 A2**
(43) Veröffentlichungstag der Anmeldung: **13.12.2000**
(21) Anmeldenummer: 00112209.2
(22) Anmeldetag: 07.06.2000
(51) Int. Cl.: B60Q 1/52

(54) **Fahrzeugwarnsystem**

(30) Priorität: 09.06.1999 DE 29909971 U
(71) Anmelder: Balzat, Ernst Michael, 53474 Bad Neuenahr (DE)
(72) Erfinder: Balzat, Ernst Michael, 53474 Bad Neuenahr (DE)
(74) Vertreter: Selting, Günther, Dipl.-Ing.

(57) **Zusammenfassung**

Ein Fahrzeugwarnsystem enthält ein Anzeigefeld (15), mit welchem einem nachfolgenden Fahrzeug Warnsignale übermittelt werden können. Diese Warnsignale werden durch einen Detektor (20) erzeugt, welcher auf das ABS-System, das ASR-System und/oder Signale einer Distanzmeßeinrichtung (19) reagiert. Dadurch werden insbesondere Auffahrunfälle vermieden.

## Beschreibung

Die Erfindung betrifft ein Fahrzeugwarnsystem für ein Kraftfahrzeug zur Verminderung von Unfallgefahr, insbesondere von Auffahrunfällen.

Ein erheblicher Teil der Verkehrsunfälle beruht auf zu dichtem Auffahren der Fahrzeuge, die somit einen zu geringen Abstand haben. Ein besonderes Gefahrenpotential entsteht, wenn mehr als zwei Autos mit zu geringem Abstand fahren. In diesem Fall besteht die Möglichkeit einer Massenkarambolage. Zur Verhinderung gefährlicher Situationen reicht das übliche Fahrzeugwarnsystem nicht aus, das lediglich den Bremsvorgang nach außen hin anzeigt. Diese Anzeige erfolgt bei zu dichtem Auffahren ohnehin zu spät. Außerdem enthält sie keine Angaben über das Ausmaß der Bremsbetätigung. Sie signalisiert vielmehr jegliche Art von Verzögerung, beginnend mit dem leichten Antippen des Bremspedals bis zur Vollbremsung. Die ständige Zunahme des Individualverkehrs und die zwischenzeitlich erreichte sehr hohe Verkehrsdichte machen es wünschenswert, daß ein Verkehrsteilnehmer mehr Informationen über das vorausfahrende Fahrzeug und dessen Verkehrssituation erhält, als dies bisher der Fall ist.

Der Erfindung liegt die Aufgabe zugrunde, ein Fahrzeugwarnsystem zu schaffen, das in einem Fahrzeug installiert ist und dem nachfolgenden Fahrzeug Informationen vermittelt, ohne daß der Fahrer mit der Informationsvermittlung beschäftigt wird.

Die Lösung dieser Aufgabe erfolgt erfindungsgemäß mit den im Patentanspruch 1 angegebenen Merkmalen.

Das erfindungsgemäße Fahrzeugwarnsystem enthält einen Detektor, der von fahrzeugeigenen Systemen her das Vorhandensein einer Gefahrensituation erkennt und daraufhin eine entsprechende Information nach außen hin anzeigt. Die Anzeige der Information erfolgt ohne Mitwirkung des Fahrers, ausgelöst durch Signale von fahrzeugeigenen Erkennungssystemen, wobei diese Erkennungssysteme vom Fahrer jedoch nicht unmittelbar beeinflußt oder betätigt werden.

Fahrzeugeigene Systeme, auf deren Zustand der Detektor reagiert, sind beispielsweise das Antiblockiersystem (ABS), die Antischlupfregelung (ASR) oder eine Distanzmeßeinrichtung. Diese Aufzählung ist nicht abschließend. Es ist auch möglich, daß die Anzeige von Informationen in Abhängigkeit von mehreren fahrzeugeigenen Systemen (kumulativ oder alternativ) erfolgt. Das Anzeigefeld kann so ausgebildet sein, daß es unterschiedliche Piktogramme anzeigt, in Abhängigkeit von demjenigen fahrzeugeigenen System, das angesprochen hat. So kann beispielsweise das Ansprechen der Distanzmeßeinrichtung eine andere Anzeige hervorrufen als das Ansprechen des ASR-Systems.

Eine andere Variante der Erfindung sieht vor, dass das fahrzeugeigene Erfassungssystem einen Verzögerungssensor enthält, der den Zustand erkennt, dass die Verzögerung (negative Beschleunigung) des Fahrzeugs einen Grenzwert übersteigt und in diesem Fall ein entsprechendes Signal an dem Anzeigefeld erzeugt. Ein Verzögerungswert von etwa 5 m/sec.² wäre als Schwellenwert geeignet.

Das Fahrzeugwarnsystem sollte jedoch nicht permanent signalisieren, sondern das Anzeigefeld sollte nur dann eine Anzeige erzeugen, wenn eine Gefahrensituation signalisiert wird.

Im folgenden wird unter Bezugnahme auf die Zeichnungen ein Ausführungsbeispiel der Erfindung näher erläutert.

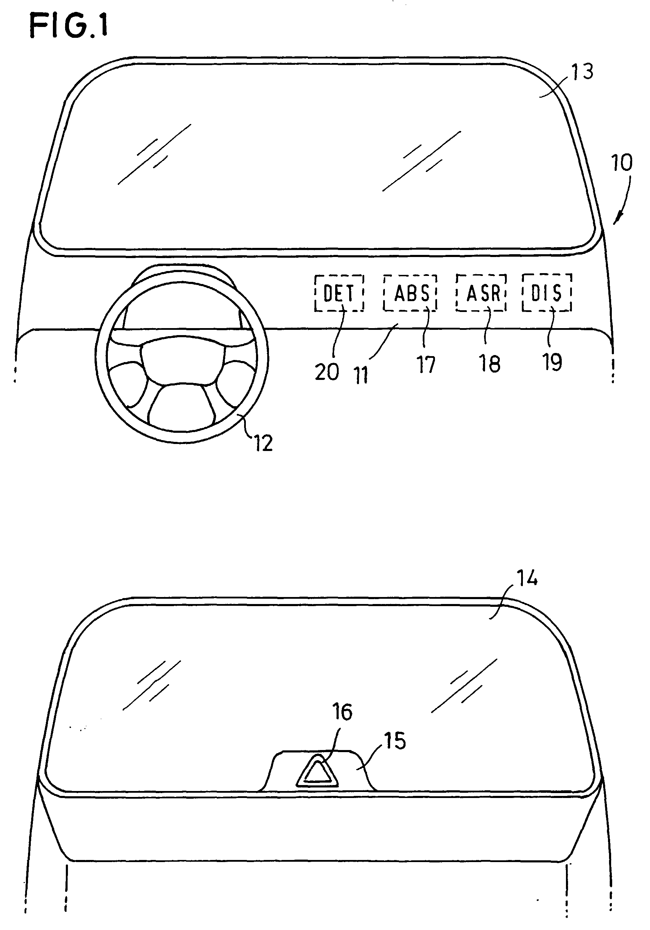

In der Zeichnung zeigt Fig. 1 eine schematische Darstellung eines Fahrzeugs mit Armaturenbrett und Heckscheibe, das mit dem Fahrzeugwarnsystem ausgestattet ist.

In Fig. 1 ist schematisch ein Fahrzeug 10 dargestellt, beispielsweise ein Personenwagen. Das Fahrzeug 10 weist ein Armaturenbrett 11, ein Lenkrad 12, eine Frontscheibe 13 und eine Heckscheibe 14 auf. In der Heckscheibe 14 befindet sich ein Anzeigefeld 15, in dem eine Information 16 zur Anzeige gebracht werden kann. Das Anzeigefeld 15 ist eine Leucht-Anzeige, in der das Symbol 16 farbig aufleuchtet.

Vorzugsweise ist das Anzeigefeld 15 so ausgebildet, daß wie auf einem Fernsehschirm zahlreiche wählbare Informationen nacheinander abgebildet werden können. Das Anzeigefeld besteht aus einer Punktmatrix aus zahlreichen Leuchtpunkten, die gesteuert aktiviert werden können, um insgesamt ein Leuchtbild zu geben. Das Anzeigefeld 15 ist hier im unteren Mittelbereich der Heckscheibe 14 angeordnet, jedoch könnte es sich auch beispielsweise am rechten oder linken Rand befinden oder an einer anderen Stelle des Fahrzeugs.

Das dargestellte Fahrzeug ist mit einem Antiblockiersystem 17, einer Antischlupfregelung 18 und einer Distanzmeßeinrichtung 19 ausgestattet. Das Antiblockiersystem 17 erhält die Drehinformationen der Räder und bewirkt eine Intervallbremsung in dem Fall, daß ein oder mehrere Räder blockieren. Die Antischlupfregelung spricht an, wenn mindestens ein Rad durchdreht. Die Distanzmeßeinrichtung 19 erkennt die Distanz des Fahrzeugs zu einem vor dem Fahrzeug befindlichen Gegenstand. Sie enthält eine Radareinrichtung, Ultraschallmeßeinrichtung oder eine andere Form von Abstandsmeßeinrichtung. Die Distanzmeßeinrichtung 19 gibt dem Fahrer den Abstand zu dem vorausfahrenden Fahrzeug an.

Sämtliche drei Systeme, nämlich ABS, ASR und DIS, sind mit einem Detektor 20 verbunden, der jeweils das Ansprechen des betreffenden Systems feststellt und daraufhin eine Anzeige im Anzeigefeld 15 aktiviert. Bei der Distandmeßeinrichtung 19 bedeutet Ansprechen das Erreichen eines bestimmten Mindestabstandes. Es können auch unterschiedliche Abstände in Intervallen oder sogar in Metern detektiert und zur Anzeige gebracht werden. Das betreffende Symbol 16 gibt dem nachfahrenden Fahrzeug an, ob das vorausfahrende Fahrzeug eine ausreichende Distanz zum Vordermann einhält.

Das Ansprechen des ABS-Systems und die Anzeige der entsprechenden Information 16 im Anzeigefeld bedeutet für den Fahrer des nachfahrenden Fahrzeugs äußerste Gefahrenstufe. Das üblicherweise aufleuchtende Bremslicht gibt nicht Aufschluß über die Stärke der Bremsung. Dagegen erzeugt das entsprechende Signal, das durch das Auslösen des ABS-Systems zur Anzeige gebracht wurde, die höchste Aufmerksamkeit des Fahrers des nachfolgenden Fahrzeugs.

## Patentansprüche

1. Fahrzeugwarnsystem, mit einem Detektor (20), der in Abhängigkeit von fahrzeugeigenen Erfassungssystemen (17,18,19) Gefahrensituationen feststellt, und einem Anzeigefeld zum Anzeigen der Signale des Detektors (20) nach außen.

2. Fahrzeugwarnsystem nach Anspruch 1, wobei der Detektor (20) auf das Ansprechen eines ABS-Systems (17) reagiert.

3. Fahrzeugwarnsystem nach Anspruch 1 oder 2, wobei der Detektor (20) auf das Ansprechen eines ASR-Systems (18) reagiert.

4. Fahrzeugwarnsystem nach einem der Ansprüche 1-3, wobei der Detektor (20) auf Signale einer Distanzmeßeinrichtung (19) reagiert.

5. Fahrzeugwarnsystem nach einem der Ansprüche 1-4, wobei der Detektor auf die Stärke der Bremsbetätigung oder die Fahrzeugverzögerung reagiert.
